# EUROPEAN PATENT APPLICATION

(11) **EP 4 518 111 A1**
(43) Date of publication of application: **05.03.2025**
(21) Application number: 22905483.8
(22) Date of filing: 22.08.2022
(51) Int. Cl.: H02K 7/18, H02K 7/02

(54) **BRUSHLESS GENERATOR FOR USE IN FITNESS EQUIPMENT**

(30) Priority: 04.03.2022 CN 202210212529
(71) Applicant: Creative Motor Technology (Dongguan) Co., Ltd., Dongguan City, Guangdong 523713 (CN)
(72) Inventor: QI, Yitong, Shenzhen, Guangdong 518000 (CN); DENG, Min, Shenzhen, Guangdong 518000 (CN)
(74) Representative: Zaboliene, Reda
(86) International application number: PCT/CN2022/114044
(87) International publication number: WO 2023/165099

(57) **Abstract**

Disclosed is a brushless generator for use in fitness equipment, which includes a flywheel (1), a cavity (2) is formed in middle of the flywheel (1), a belt pulley (3) is fixed at an upper end of the cavity (2), a connecting shaft (4) is vertically arranged in the belt pulley (3), a rear cover (5) is horizontally embedded in a bottom of the cavity (2), an iron core (6) is horizontally fixed on the rear cover (5), a winding coil (7) is surrounded on the iron core (6), a bottom of the connecting shaft (4) penetrates through a bottom of the rear cover (5), a magnetic steel is fixed around an inner wall of the cavity (2), the magnetic steel and the iron core (6) are arranged at a same horizontal height, a needle bearing (9) is horizontally sleeved in middle of connection between the belt pulley (3) and the cavity (2), and an inner wall of the needle bearing (9) is connected to the belt pulley (3).

## Description

### FIELD OF TECHNOLOGY

The present disclosure particularly relates to a brushless generator for use in fitness equipment.

### BACKGROUND

The brushless generator uses permanent magnet to cut the coil winding above the stator to generate induced electromotive force, to supply power to the electrified equipment through the rotating rectifier composed of peripheral diodes (or thyristors), thereby achieving the conversion from mechanical energy to electric energy.

Nowadays, more and more people are concerned about fitting, so herein a brushless generator is provided that allows people to charge mobile phones, tablets or other electronic equipment and lithium batteries while exercising, and to be environmentally friendly.

### SUMMARY

To overcome the above shortcomings, the present disclosure aims to provide a technical solution capable of solving the above problems.

Provided is a brushless generator for use in fitness equipment, which includes a flywheel, a cavity is formed in middle of the flywheel, a belt pulley is fixed at an upper end of the cavity, a connecting shaft is vertically arranged in the belt pulley, a rear cover is horizontally embedded in a bottom of the cavity, an iron core is horizontally fixed on the rear cover, a winding coil is surrounded on the iron core, a bottom of the connecting shaft penetrates through a bottom of the rear cover, a magnetic steel is fixed around an inner wall of the cavity, the magnetic steel and the iron core are arranged at a same horizontal height, a needle bearing is horizontally sleeved in middle of connection between the belt pulley and the cavity, and an inner wall of the needle bearing is connected to the belt pulley.

Preferably, a first deep groove ball bearing is sleeved on an upper end of the belt pulley, and an inner side wall of the first deep groove ball bearing is connected to the upper end of the belt pulley.

Preferably, a second deep groove ball bearing is fitted on a lower end of the belt pulley by spacing, and an inner side wall of the second deep groove ball bearing is fixedly connected to a lower end of the connecting shaft.

Preferably, a third deep groove ball bearing is horizontally embedded in an inner bottom of the belt pulley, and an inner side wall of the third deep groove ball bearing is connected to the connecting shaft.

Preferably, an outer side wall of the flywheel is sleeved with an aluminum ring.

Preferably, the magnetic steel is sleeved with a magnetic insulation cover.

Preferably, the magnetic steel has a plurality of shapes.

Compared with the prior art, the present disclosure has the advantages that when a person treads a bicycle, the brushless generator used in the fitness equipment of the present disclosure drives a belt pulley to rotate through a belt, the belt pulley drives the flywheel to rotate through a needle bearing, magnetic steel is adhered inside the flywheel, the magnetic steel rotates together with the flywheel,

The rotating magnetic field is constantly cutting the conductor, generating an induced electric potential, and a three-phase lead of the coil is connected to an external circuit to convert mechanical energy into electrical energy, achieving energy conversion, energy saving and environmental protection, making it possible to charge mobile phones or other electronic devices during exercise.

The magnetic steels of the present disclosure have various shapes, and magnetic steels with different shapes have different functions.

Additional aspects and advantages of the present disclosure will be set forth in part in the following description, which will become apparent in part from the following description or will become apparent from the practice of the present disclosure.

### BRIEF DESCRIPTION OF THE DRAWINGS

In order to more clearly illustrate embodiments of the present disclosure or technical solutions in the prior art, the following will briefly introduce the drawings that are desired to be used in the description of the embodiments or prior art. Obviously, the drawings in the following description are merely some embodiments of the present disclosure, and other drawings may also be obtained according to these drawings without exerting inventive effort by those ordinarily skilled in the art.
FIG. 1 is a structural diagram of the present disclosure;
FIG. 2 is an inside structural diagram of the present disclosure;
FIG. 3 is an exploded structural diagram of the present disclosure;
FIG. 4 is a structural diagram of a rectangular shaped magnetic steel in the present disclosure;
FIG. 5 is a structural diagram of an arc-shaped magnetic steel in the present disclosure; and
FIG. 6 is a structural diagram of a bread-shaped magnetic steel in the present disclosure.

In the drawings: 1. flywheel, 2. cavity, 3. belt pulley, 4. connecting shaft, 5. rear cover, 6. iron core, 7. winding coil, 8. magnetic steel, 9. needle bearing, 10. first deep groove ball bearing, 11. second deep groove ball bearing, 12. aluminum ring, 13. magnetic insulation cover, 14. third deep groove ball bearing, 15. magnetic steel', 16. magnetic steel".

### DESCRIPTION OF THE EMBODIMENTS

A clear and complete description of the technical solution in the embodiments of the present disclosure will be made below. Obviously, the described embodiments are only part the embodiments of the present disclosure, but not all of them. Based on the embodiments of the present disclosure, all other embodiments obtained by those ordinarily skilled in the art without exerting creative effort fall within the scope of protection of the present disclosure.

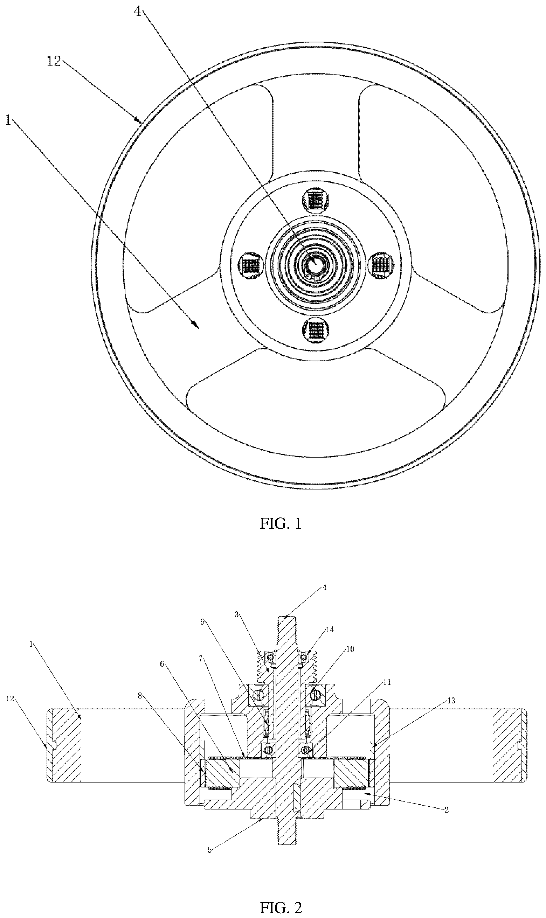

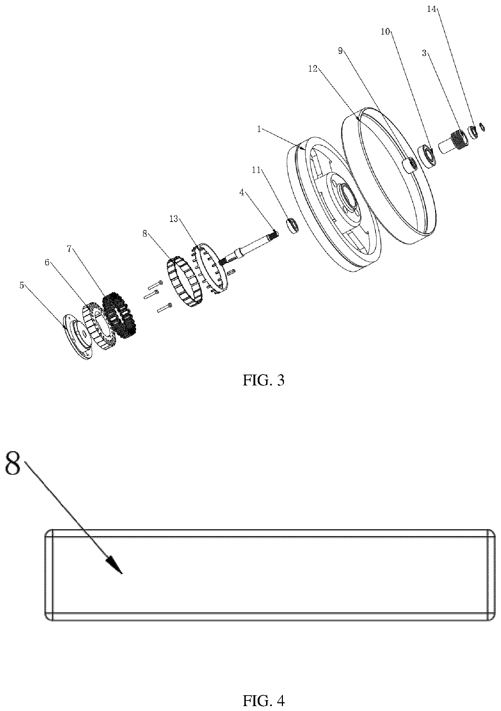

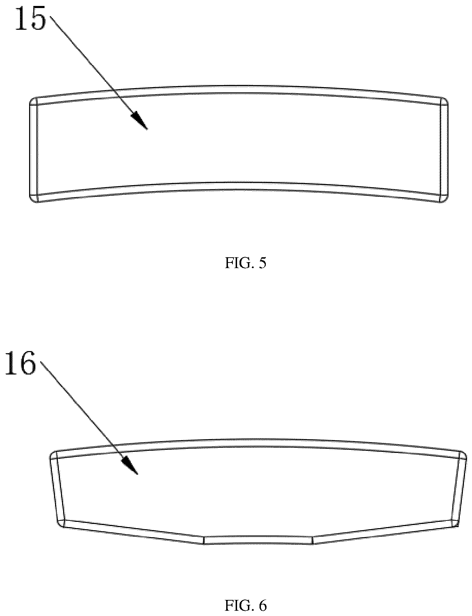

Referring to FIGS. 1-6, in the embodiment of the present disclosure, provided is a brushless generator for use in fitness equipment, which includes a flywheel 1, a cavity 2 is formed in middle of the flywheel 1, a belt pulley 3 is fixed at an upper end of the cavity 2, a connecting shaft 4 is vertically arranged in the belt pulley 3, a rear cover 5 is horizontally embedded in a bottom of the cavity 2, an iron core 6 is horizontally fixed on the rear cover 5, a winding coil 7 is surrounded on the iron core 6, the winding coil 7 is equipped with a three-phase lead for external circuits, a bottom of the connecting shaft 4 penetrates through a bottom of the rear cover 5, a magnetic steel 8 is fixed around an inner wall of the cavity 2, the magnetic steel 8 and the iron core 6 are arranged at a same horizontal height, a needle bearing 9 is horizontally sleeved in middle of connection between the belt pulley 3 and the cavity 2, and an inner wall of the needle bearing 9 is connected to the belt pulley 3.

Preferably, a first deep groove ball bearing 10 is sleeved on an upper end of the belt pulley 3, and an inner side wall of the first deep groove ball bearing 10 is connected to the upper end of the belt pulley 3.

Preferably, a second deep groove ball bearing 11 is fitted on a lower end of the belt pulley 3 by spacing, and an inner side wall of the second deep groove ball bearing 11 is fixedly connected to a lower end of the connecting shaft 4.

Preferably, a third deep groove ball bearing 14 is horizontally embedded in an inner bottom of the belt pulley 3, and an inner side wall of the third deep groove ball bearing 14 is connected to the connecting shaft 4.

Preferably, an outer side wall of the flywheel 1 is sleeved with an aluminum ring 12.

Preferably, the magnetic steel 8 is sleeved with a magnetic insulation cover 13.

Preferably, the iron core 6 has 24 teeth and 20 poles, a winding coefficient of 0.966, a magnetic resistance of 0.024 N.m, a noise level of 45-55 dBA, and a vibration level of 1.1 mm/s.

The following is a comparison table between the present disclosure and existing products:

| | Brushless generator | Existing brushless generator |
|---|---|---|
| Number of Teeth | 24 teeth | 27 teeth |
| Number of poles | 20 poles | 18 poles |
| Coefficient of winding | 0.966 | 0.866 |
| Magnetic resistance | 0.025 N.m | 3.2 N.m |
| Noise level | 45- 55 dBA | 70-80 dBA |
| Vibration level | 1.1 mm/s | 4.5 mm/s |

Preferably, the magnetic steel 8 has a plurality of shapes, and the magnetic steel 8 formed into a rectangular shape facilitates the suppression of noise and vibration.

The magnetic steel' 15 is formed into an arc shape to produce maximum output power.

The magnetic steel" 16 is shaped into a bread type, which can reduce magnetic resistance, and has low vibration and noise.

It is intelligible to those skilled in the art that, the present disclosure is not limited to the details of the embodiments described above. And the present disclosure can be implemented in other concrete forms without deviating the spirit or basic features of the present disclosure. Thus, the embodiments are to be regarded as exemplary and non-limiting from any point of view, and the scope of the present disclosure is defined by the appended claims rather than the above description, so that all variations falling within the meaning and scope of the equivalent elements of the claims are intended to be included in the present disclosure.

## Claims

1. A brushless generator for use in fitness equipment, **characterized in that** the brushless generator comprises a flywheel (1), a cavity (2) is formed in middle of the flywheel (1), a belt pulley (3) is fixed at an upper end of the cavity (2), a connecting shaft (4) is vertically arranged in the belt pulley (3), a rear cover (5) is horizontally embedded in a bottom of the cavity (2), an iron core (6) is horizontally fixed on the rear cover (5), a winding coil (7) is surrounded on the iron core (6), a bottom of the connecting shaft (4) penetrates through a bottom of the rear cover (5), a magnetic steel (8) is fixed around an inner wall of the cavity (2), the magnetic steel (8) and the iron core (6) are arranged at a same horizontal height, a needle bearing (9) is horizontally sleeved in middle of connection between the belt pulley (3) and the cavity (2), and an inner wall of the needle bearing (9) is connected to the belt pulley (3).

2. The brushless generator for use in fitness equipment according to claim 1, **characterized in that** a first deep groove ball bearing (10) is sleeved on an upper end of the belt pulley (3), and an inner side wall of the first deep groove ball bearing (10) is connected to the upper end of the belt pulley (3).

3. The brushless generator for use in fitness equipment according to claim 1, **characterized in that** a second deep groove ball bearing (11) is fitted on a lower end of the belt pulley (3) by spacing, and an inner side wall of the second deep groove ball bearing (11) is fixedly connected to a lower end of the connecting shaft (4).

4. The brushless generator for use in fitness equipment according to claim 1, **characterized in that** a third deep groove ball bearing (14) is horizontally embedded in an inner bottom of the belt pulley (3), and an inner side wall of the third deep groove ball bearing (14) is connected to the connecting shaft (4).

5. The brushless generator for use in fitness equipment according to claim 1, **characterized in that** an outer side wall of the flywheel (1) is sleeved with an aluminum ring (12).

6. The brushless generator for use in fitness equipment according to claim 1, **characterized in that** the magnetic steel (8) is sleeved with a magnetic insulation cover (13).

7. The brushless generator for use in fitness equipment according to claim 1, **characterized in that** the magnetic steel (8) has a plurality of shapes.
